# EUROPÄISCHE PATENTSCHRIFT

(11) **EP 2 529 191 B1**
(45) Veröffentlichungstag und Bekanntmachung des Hinweises auf die Patenterteilung: **07.02.2018**
(21) Anmeldenummer: 10790645.5
(22) Anmeldetag: 13.12.2010
(51) Int. Cl.: G01F 1/58

(54) **MAGNETISCH-INDUKTIVES DURCHFLUSSMESSGERÄT**
MAGNETIC INDUCTIVE FLOW METER
DÉBITMÈTRE MAGNÉTICO-INDUCTIF

(30) Priorität: 29.01.2010 DE 102010001393
(43) Veröffentlichungstag der Anmeldung: 05.12.2012
(73) Patentinhaber: Endress+Hauser Flowtec AG, 4153 Reinach (CH)
(72) Erfinder: VOIGT, Frank, 79576 Weil am Rhein (DE); ZINGG, Thomas, 4055 Basel (CH); BÄHR, Günther, 4106 Therwil (CH); WOHLGEMUTH, Werner, 4206 Seewen (CH); CRNKOVIC, Alexandre, 68580 Hinzlingen (FR)
(74) Vertreter: Andres, Angelika Maria
(86) Internationale Anmeldenummer: PCT/EP2010/069433
(87) Internationale Veröffentlichungsnummer: WO 2011/091899

(56) Entgegenhaltungen:
- WO-A1-2004/072590
- DE-A1- 3 511 033
- DE-A1- 3 545 155

## Beschreibung

Die vorliegende Erfindung betrifft ein magnetisch-induktives Durchflussmessgerät zur Ermittlung des Durchflusses eines Messmediums durch ein Messrohr, mit zumindest einer ersten Spulenbaugruppe mit einem Spulenkörper zur Aufnahme eines Spulenkerns einer Spule, wobei die Spule auf den Spulenkörper gewickelt ist und wobei der Spulenkern in einer ersten Öffnung des Spulenkörpers mit einer Längsachse des Spulenkerns koaxial zur Spule angeordnet ist, wobei der Spulenkern eine Ausformung aufweist und wobei der Spulenkörper einen ersten Anschlag aufweist, welcher zwischen Messrohr und Spule angeordnet ist, wobei die Ausformung des Spulenkerns im montierten Zustand der ersten Spulenbaugruppe am ersten Anschlag des Spulenkörpers anliegt und eine Verschiebung des Spulenkerns relativ zum Spulenkörper längs der Längsachse des Spulenkerns in eine vom Messrohr abgewandte erste Richtung unterbindet.

Magnetisch-induktive Durchflussmessgeräte nutzen für die volumetrische Strömungsmessung das Prinzip der elektrodynamischen Induktion aus und sind aus einer Vielzahl von Veröffentlichungen bekannt. Senkrecht zu einem Magnetfeld bewegte Ladungsträger des Mediums induzieren eine Messspannung in im Wesentlichen senkrecht zur Durchflussrichtung des Mediums und senkrecht zur Richtung des Magnetfeldes angeordneten Messelektroden. Die in die Messelektroden induzierte Messspannung ist proportional zu der über den Querschnitt des Messrohres gemittelten Strömungsgeschwindigkeit des Mediums, also proportional zum Volumenstrom. Ist die Dichte des Mediums bekannt, lässt sich der Massestrom in der Rohrleitung bzw. in dem Messrohr bestimmen. Die Messspannung wird üblicherweise über ein Messelektrodenpaar abgegriffen, das bezüglich der Koordinate entlang der Messrohrachse in dem Bereich maximaler Magnetfeldstärke angeordnet ist und wo folglich die maximale Messspannung zu erwarten ist.

Die WO 2004/072590 A1 offenbart ein magnetisch-induktives Durchflussmessgerät mit zwei an einem Messrohr gegenüberliegend angeordneten Spulenkörpern mit jeweils einer Spule und einem Polschuh als Spulenkern. Der Polschuh ist in einer ersten Öffnung des Spulenkörpers längs der Spulenachse geführt. Er weist eine Ausformung auf, die so ausgestaltet ist, dass das Messrohr vom Polschuh näherungsweise spaltfrei kontaktierbar ist. Die Spulenkörper werden mittels zweier Feldrückführ-Elemente gegenseitig vorgespannt. Dadurch wird der jeweilige Polschuh auf das Messrohr angedrückt.

Die Aufgabe der Erfindung besteht darin, ein kostengünstig herzustellendes, modular aufgebautes magnetisch-induktives Messgerät bereit zu stellen.

Die Aufgabe wird gelöst durch den Gegenstand des Anspruchs 1. Weiterbildungen und Ausgestaltungen der Erfindungen finden sich in den Merkmalen der abhängigen Ansprüche wieder.

Die Erfindung lässt zahlreiche Ausführungsformen zu. Einige davon sollen hier kurz anhand der nachfolgenden Figuren näher erläutert werden. Gleiche Elemente sind in den Figuren mit gleichen Bezugszeichen versehen.
- Fig. 1: zeigt zwei erfindungsgemäße, identische Spulenanordnungen in einer Explosionsdarstellung,
- Fig. 2: zeigt perspektivisch zwei erfindungsgemäße, identische Spulenanordnungen im montierten Zustand,
- Fig. 3: zeigt einen Ausschnitt einer erfindungsgemäßen Spulenanordnung mit montierten Polblechen im Querschnitt,
- Fig. 4: zeigt ein erfindungsgemäßes magnetisch-induktives Durchflussmessgerät.

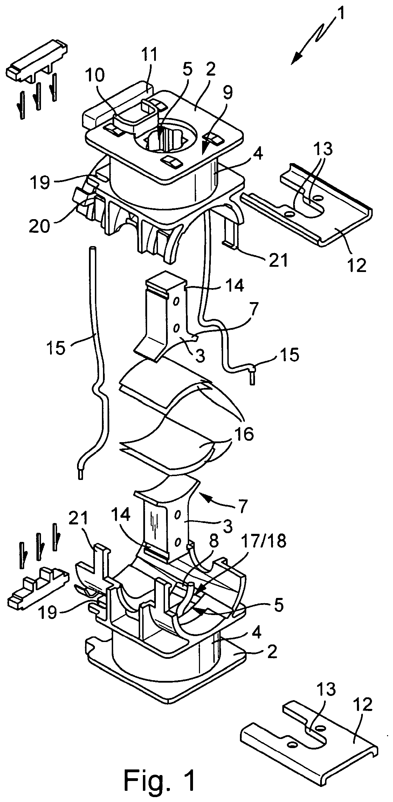

In Fig. 1 sind zwei baugleiche Spulenbaugruppen 1 eines erfindungsgemäßen magnetisch-induktiven Durchflussmessgeräts dargestellt. Verwendet wird ein solches Durchflussmessgerät z.B. in der Prozessmesstechnik zur Ermittlung des Durchflusses eines Messmediums durch ein hier nicht gezeichnetes Messrohr. Jede Spulenbaugruppe 1 weist jeweils einen Spulenkörper 2 zur Aufnahme eines Spulenkerns 3 einer Spule 4 auf, wobei die Spule 4 auf den Spulenkörper 2 gewickelt ist. Der Spulenkern 3 ist in einer ersten Öffnung 5 des Spulenkörpers 2 koaxial zur Spule 4 angeordnet. Er ist entlang seiner Längsachse in der Öffnung zumindest in einer Richtung, im betriebsfertigen Zustand im Wesentlichen senkrecht zu einer Messrohrlängsachse, verschiebbar geführt.

Erfindungsgemäß weist der Spulenkörper 2 zumindest eine erste Ausformung 7 auf. In diesem Beispiel ist der Spulenkern 3 als Polschuh ausgeformt. Ein Polschuh dient zur Feldführung und ist entsprechend ausgeformt. Der Spulenkern 3 übernimmt hier also die Funktion eines Spulenkerns und eines Polschuhs, insbesondere der Feldlinienführung im Messrohr. Dieses Bauteil könnte hier alternativ auch als Polschuh bezeichnet werden. Die Ausformung 7 weist hier die Form eines Rohrabschnitts auf. Somit kann ein Messrohr flächig kontaktiert werden. Die Krümmung und die Größe sind abgestimmt mit dem Messrohr für eine gute Passform. Die Ausformung 7 weist in diesem Fall einen größeren Querschnitt quer zur Längsachse des Spulenkerns 3 auf, als die Öffnung 5 im Spulenkörper 2. Daher passt die Ausformung 7 nicht durch die Öffnung 5 des Spulenkörpers 2. Der Spulenkörper 2 weist einen ersten Anschlag 8, insbesondere auf einer dem Messrohr 4 zugewandten Seite der Spule 4, auf. Der Anschlag 8 ist also in diesem Beispiel zwischen Messrohr 6 und Spule 4 am Spulenkörper 2 angeordnet. Die Ausformung 7 und der Anschlag 8 sind dabei so ausgeformt, dass die Ausformung 7 des Spulenkerns 3 bzw. der Polschuh im montierten Zustand der ersten Spulenbaugruppe 1 am ersten Anschlag 8 des Spulenkörpers 2 anliegt. Eine Verschiebung des Spulenkerns 3 relativ zum Spulenkörper 2 längs der Längsachse des Spulenkerns 3 in eine vom Messrohr 6 abgewandte erste Richtung ist damit unterbunden. Der Anschlag 8 weist insbesondere im Wesentlichen die Form der Ausformung 7 auf, so dass diese großflächig am Anschlag 8 anliegt. Dafür könnte ein eigenes Formnest im Spulenkörper 3 vorgesehen sein.

Erfindungsgemäß weist der Spulenkörper 2 einen zweiten Anschlag 9 auf einer dem Messrohr 6 abgewandten Seite des Spulenkörpers 2 und damit auch der Spule 4 auf. An diesen zweiten Anschlag 9 ist ein Befestigungselement 12 anlegbar. Das Befestigungselement 12 wird dabei mit dem Spulenkern 3 form- und/oder kraftschlüssig so verbunden, dass der Spulenkern 3 unter einer Axialspannung, also einer längs der Längsachse des Spulenkerns 3 wirkenden Spannung, am Spulenkörper 2 befestigt ist. Der Spulenkern 3 wird somit mit einem Befestigungselement 12, welches im montierten Zustand am zweiten Anschlag 9 des Spulenkörpers 2 anliegt, unter einer Vorspannung zumindest im Bereich der Spule 4 am Spulenkörper 2 befestigt. Die Spannung wirkt also zumindest im Bereich der Spule 4, insbesondere zwischen dem ersten Anschlag 8 und dem zweiten Anschlag 9 des Spulenkörpers 2. Der erste Anschlag 8 liegt hier außerhalb der Öffnung 5 des Spulenkörpers 2, bzw. begrenzt diese. Da hier der Spulenkern als Polschuh ausgeformt ist, ist die Ausformung 7 an einem im montierten Zustand dem Messrohr zugewandten, ersten Ende des Spulenkerns 3 lokalisiert. Vereinfacht könnte sie als T- oder Y-förmig bezeichnet werden. Durch die so beschriebene Lagerung ist der Spulenkern 3 im Spulenkörper 2 definiert positioniert. Die Führung in der Öffnung 5 verhindert allzu große Verschiebungen senkrecht zur Längsachse des Spulenkerns 3. Die Vorspannung zwischen beiden Anschlägen 8 und 9 verhindert eine Verschiebung längs der Längsachse zum Spulenkörper 2.

Die Vorspannung und die Befestigung mittels des Befestigungselements 12 wird beispielsweise dadurch erreicht, dass der Spulenkern 3 eine Nut 14 aufweist und dass das Befestigungselement 12 zumindest einen zur Nut 14 bzw. in die Nut 14 des Spulenkerns 3 passenden Spund 13 aufweist, wobei Spulenkern 3 und Befestigungselement 12 über eine formschlüssige Verbindung von Nut 14 und Spund 13 miteinander verbunden sind. Das Befestigungselement 12 kann dabei als Blech mit entsprechenden Aussparungen, wie skizziert, ausgestaltet sein. Somit wird auch durch die Elastizität des Befestigungselements 12 und der Ausformung 7 des Spulenkerns 3 die Vorspannung im Spulenkern 3 ermöglicht. Die Nut 14 ist insbesondere an seinem ersten Ende gegenüberliegenden, zweiten Ende des Spulenkerns 3 angeordnet.

Wird das dargestellte Befestigungselement 12 mit seinen Spunden 13 in die Nuten 14 des Spulenkerns 3 eingeschoben, liegt es, wenn der Spulenkern 3 ist die Öffnung des Spulenkörpers 2 eingeführt ist, am zweiten Anschlag 9 des Spulenkörpers 3 auf. Um es gegen eine Verschiebung in beide andere Raumrichtungen senkrecht zur Längsachse des Spulenkerns 3 gegen eine Verschiebung zu sichern, weist der Spulenkörper 2 einen dritten Anschlag 10 und einen vierten Anschlag 11 auf, wobei das Befestigungselement 12 im montierten Zustand am dritten und am vierten Anschlag 10 und 11 anliegt, wodurch dann eine Verschiebung des Befestigungselements 12 in eine zweite Richtung, senkrecht zur ersten Richtung und wodurch eine Verschiebung des Befestigungselements 12 in eine dritte Richtung, senkrecht zur ersten und zur zweiten Richtung unterbunden ist. In diesem Ausführungsbeispiel werden somit zwei Anschläge 10 und 11 zur Lagedefinition des Befestigungselements 12 genutzt. Bei einer Konischen Aussparung im Befestigungselement und einem entsprechend geformten Anschlag auf dem Spulenkörper wäre nur ein Anschlag ausreichend, um eine Verschiebung des Befestigungselements in eine zweite Richtung, senkrecht zur ersten Richtung und eine Verschiebung des Befestigungselements in eine dritte Richtung, senkrecht zur ersten und zur zweiten Richtung zu unterbinden.

Weiterhin offenbart sind zwei Polbleche 16, welche im montierten Zustand des magnetisch-induktiven Durchflussmessgeräts zwischen Spulenkern 3 und Messrohr 6 näherungsweise luftspaltfrei angeordnet sind. Alternativ ist auch nur die Montage eines Polblechs möglich. Auch die Verwendung dreier oder mehrere Polbleche soll hier nicht ausgeschlossen werden. Die Funktion der Polbleche 16 ist die Magnetfeldführung im Messrohr. Daher sind die Polbleche 16 und der Spulenkern 3 bzw. der Polschuh so zu dimensionieren, dass die Berührungsfläche der beiden Bauteile sehr groß und möglichst spaltfrei ist. Natürlich ist der Spulenkörper 2 entsprechend auszulegen, insbesondere dann wenn jedes Polblech 16 separat in ein dafür vorgesehenes Formnest 17, 18 im Spulenkörper 2 eingeklickt ist. Jedes Polblech 16 ist in einem eigenen Formnest 17, 18 am Spulenkörper befestigt, z.B. durch Einklicken. Davon unberührt sollten die Berührungsflächen der Polbleche 16 mit dem Spulenkern 3 bzw. dem Polschuh und dem Messrohr möglichst groß und Spaltfrei sein.

Zum magnetisch-induktiven Durchflussmessgerät werden zwei Spulenbaugruppen 1 auf gegenüberliegenden Seiten eines Messrohrs angeordnet. Dabei werden die Spulen 4 so angeschlossen werden, dass das von ihnen erzeugte Magnetfeld in eine gemeinsame Richtung weist, insbesondere weisen die Feldlinien des erzeugten Magnetfelds in die erste Richtung längs der Längsachsen der koaxialen Spulenkerne 3. Da es sich hier um zwei technisch identische Spulenbaugruppen 1 mit jeweils gleichen Komponenten und Bauteilen und zueinander komplementären Schnittstellen handelt, welche somit gleiche Funktionen erfüllen, und da eben auch die Spulen 4 der beiden Spulenbaugruppen 1 gleich aufgebaut sind müssen die Spulen 4 entsprechend angeschlossen werden. Sie liegen im Wesentlichen in näherungsweise zwei parallelen Ebenen um 180° zueinander verdreht. Die Spulenbaugruppen 1 sind konstruktiv so ausgestaltet, dass sie nur in einer vorbestimmten Art und Weise montierbar sind, was unter dem Begriff Poka-Yoke subsumiert wird.

Die erste Spulenbaugruppe 1 und die zweite Spulenbaugruppe 1 sind insbesondere formschlüssig miteinander verbunden. Rasthaken 21 greifen in dafür vorgesehene und ausgelegte bzw. dimensionierte Öse 20 des jeweiligen Verbindungspartners, also der jeweils anderen Spulenbaugruppe, ein. Dies kann unter einer geringen Vorspannung koaxial zur Längsachse des Spulenkerns 3 geschehen, womit die Spulenkörper kraftschlüssig mit dem Messrohr verbunden wären. Da die Spulenkörper aber beispielsweise aus Kunststoff gefertigt sind, könnte es jedoch durch Fließprozesse im Kunststoff nach einer bestimmten Zeit zum Verlust dieser Vorspannung kommen. Alternativ werden Feldrückführbleche an den Spulenkörpern 1 angebracht, welche die Spulenkörper 1 auf das Messrohr drücken und mit diesem kraftschlüssig verbinden. Die Spulenkörper sind in beiden Fällen so ausgestaltet, dass sie jeweils quasi luftspaltfrei das Messrohr kontaktieren. Gegen Verdrehen um eine und gegen Verschieben längs einer Längsachse des Messrohrs sind die montierten Spulenbaugruppen 1 mittels den in das Messrohr eingesetzten oder an das Messrohr angesetzten Elektroden der Elektrodenbaugruppen gesichert.

Jeder Spulenkörper 1 weist darüber hinaus in diesem Ausführungsbeispiel zumindest eine Kabelführung 19, hier in Form einer Einkerbung und eines Kabelhakens, zur Führung eines Kabels aufweist, so dass das geführte Kabel einer vorgegebenen Länge einen vorgegebenen maximalen Abstand zum Spulenkörper 2 nicht überschreitet. Diese Kabelführung 19 ist insbesondere zur Führung der Spulenkabel, welche in dieser Abbildung nicht gezeigt sind. Eine weitere Funktion der Kabelführung 19 ist das Sichern der Kabel gegen Abwickeln der Spule. Eine weitere Kabelführung kann in den Spulenkörpern 1 vorgesehen sein, um Kabel 15 eines Messumformers zu den Elektroden zu führen. Beispielsweise werden diese Kabel 15 in der Öffnung 5 geführt, insbesondere durch eine zusätzliche Aussparung in der Öffnung 5.

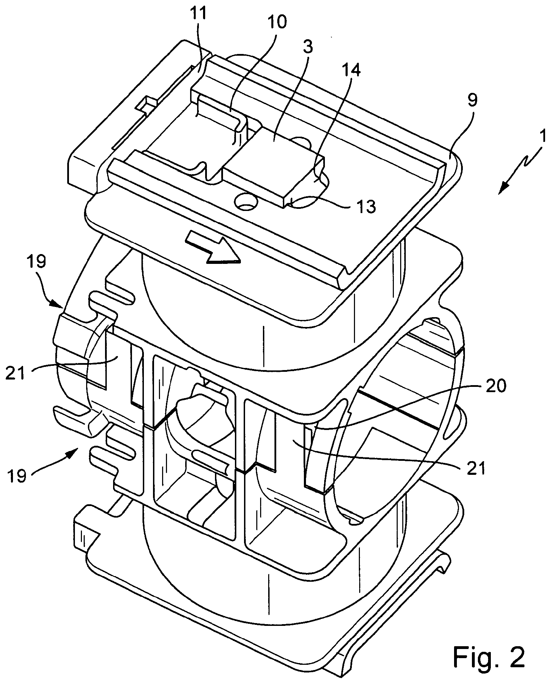

Fig. 2 veranschaulicht zwei montierte Spulenbaugruppen 1. In den beiden Spulenbaugruppen 1 befindet sich in betriebsfertigem Zustand des magnetisch-induktiven Messsystems das Messrohr, welches hier der Einfachheit halber nicht dargestellt ist. Sehr gut zu sehen ist die Kabelführung 19 in Form von jeweils einer Einkerbung und eines Kabelhakens. Auch hier wurde die Darstellung des zu führenden Kabels aus Gründe der Übersichtlichkeit weggelassen. Das Kabel würde einfach in die Kabelführung 19 eingeführt werden.

Ebenfalls gut zu sehen ist das montierte Befestigungselement 12, was am zweiten, dritten und vierten Anschlag 9, 10 und 11 anliegt. Dadurch ist es lediglich in Richtung des eingezeichneten Pfeils entfernbar. Die Spunde 13 sind in die Nuten 14 des Spulenkerns 3 eingeführt und bilden eine Spund-Nut-Verbindung. Die Rasthaken 21 der einen Spulenbaugruppe 1 sind in die Ösen 20 der anderen Spulenbaugruppe 1 eingerastet.

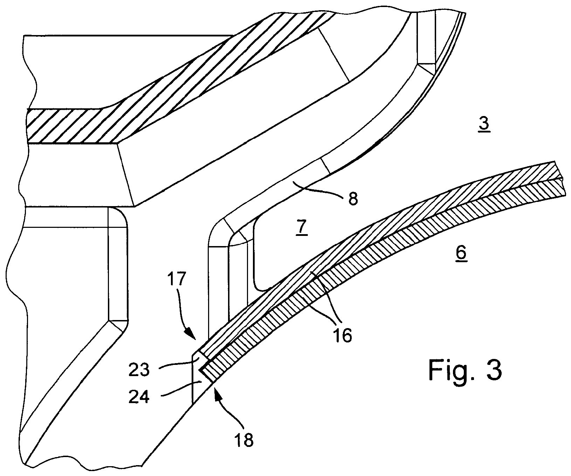

Fig. 3 zeigt den Teilquerschnitt durch den dem Messrohr zugewandten Teil einer Spulenbaugruppe eines montierten magnetisch-induktiven Durchflussmessgeräts mit zwei Polblechen 16. Der als gewölbter Polschuh und zumindest an der dem Messrohr 6 zugewandten Seite rohrförmige Spulenkern 3 liegt mit seiner Ausformung 7 am ersten Anschlag 8 des Spulenkörpers 2 an. Zwischen dem Spulenkern 3 und dem Messrohr 6 sind die zwei Polbleche 16 angeordnet. Sie bilden eine quasi spaltfreie Brücke zwischen Spulenkern 3 und Messrohr 6. Dabei ist jedes der Polbleche 16 in einem eigenen Formnest 17, 18 gehalten. Die Formnester 17, 18 sind ebenfalls der Kontur des Messrohrs 6 angepasste Wölbungen im jeweiligen Spulenkörper 1, welche mit Stufen 23, 24 abgeschlossen werden. Somit ist es möglich, beide Polbleche 16 in ihr jeweils vorgesehenes Formnest 17, 18 einzuklicken. Dadurch ist jedes der Polbleche 16 in einer definierten Lage vorgespannt.

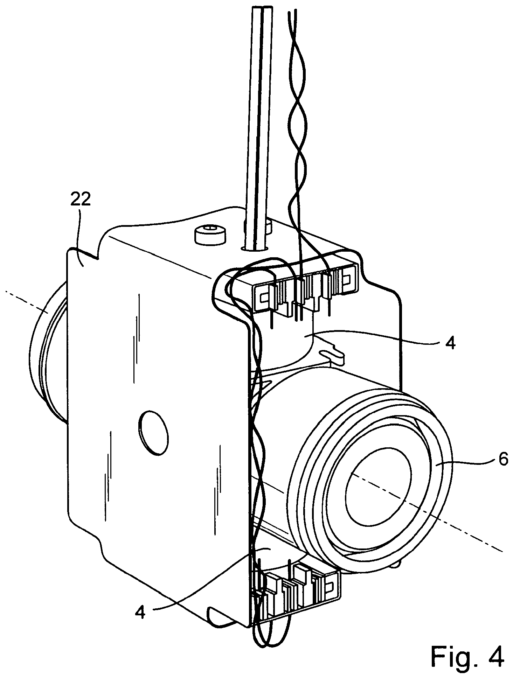

In Fig. 4 ist eine fertig montierte Sensorik eines erfindungsgemäßen magnetisch-induktives Durchflussmessgeräts zu sehen. Beide Spulenbaugruppen mit den Spulen 4 sind auf ein Messrohr 6 montiert und werden von Feldrückführblechen 22 umgeben, welche zwei Funktionen erfüllen. Einerseits dienen die Feldrückführbleche 22 der Ausrichtung und Führung der Feldlinien des Magnetfelds, insbesondere gegen das so genannte Übersprechen, also das Ausweiten des Magnetfelds auf ein weiteres, magnetisch-induktives Durchflussmessgerät in der unmittelbaren Nähe und verhindern dadurch die Beeinflussung der Messung des weiteren magnetisch-induktiven Durchflussmessgeräts. Andererseits können die Spulenbaugruppen mittels der Feldrückführbleche 22 auf das Messrohr 6 gedrückt werden.

### Bezugszeichenliste

- 1: Spulenbaugruppe
- 2: Spulenkörper
- 3: Spulenkern mit Polschuh
- 4: Spule
- 5: Erste Öffnung im Spulenkörper
- 6: Messrohr
- 7: Ausformung des Polschuhs
- 8: Erster Anschlag des Spulenkörpers
- 9: Zweiter Anschlag des Spulenkörpers
- 10: Dritter Anschlag des Spulenkörpers
- 11: Vierter Anschlag des Spulenkörpers
- 12: Befestigungselement
- 13: Spund des Befestigungselements
- 14: Nut des Polschuhs
- 15: Signalkabel
- 16: Polblech
- 17: Erstes Formnest für das Polblech im Spulenkörper
- 18: Zweites Formnest für das Polblech im Spulenkörper
- 19: Kabelführung
- 20: Öse
- 21: Rasthaken
- 22: Feldrückführblechen
- 23: Erste Stufe
- 24: Zweite Stufe

## Patentansprüche

1. Magnetisch-induktives Durchflussmessgerät zur Ermittlung des Durchflusses eines Messmediums durch ein Messrohr (6), mit zumindest einer ersten Spulenbaugruppe (1)
mit einem Spulenkörper (2) zur Aufnahme eines Spulenkerns (3),
dem Spulenkern (3),
einer Spule (4), und
einem Befestigungselement (12) zur Festlegung des Spulenkerns (3) am Spulenkörper (2),
wobei die Spule (4) auf den Spulenkörper (2) gewickelt ist und wobei der Spulenkern (3) in einer ersten Öffnung (5) des Spulenkörpers (2) mit einer Längsachse des Spulenkerns (3) koaxial zur Spule (4) angeordnet ist, wobei der Spulenkern (3) eine Ausformung (7) aufweist und wobei der Spulenkörper (2) einen ersten Anschlag (8) aufweist, welcher zwischen Messrohr (6) und Spule (4) angeordnet ist, wobei die Ausformung (7) des Spulenkerns (3) im montierten Zustand der ersten Spulenbaugruppe (1) am ersten Anschlag (8) des Spulenkörpers (2) anliegt und eine Verschiebung des Spulenkerns (3) relativ zum Spulenkörper (2) längs der Längsachse des Spulenkerns (3) in eine vom Messrohr (6) abgewandte erste Richtung unterbindet,
**dadurch gekennzeichnet,**
**dass** der Spulenkörper (2) einen zweiten Anschlag (9) auf einer dem Messrohr (6) abgewandten Seite des Spulenkörpers (2) aufweist, wobei der Spulenkern (3) mit dem Befestigungselement (12), welches im montierten Zustand am zweiten Anschlag (9) des Spulenkörpers (2) anliegt, unter einer Vorspannung längs der Längsachse des Spulenkerns (3) zwischen dem ersten Anschlag (8) und dem zweiten Anschlag (9) des Spulenkörpers (2) am Spulenkörper (2) befestigt ist.

2. Magnetisch-induktives Durchflussmessgerät nach Anspruch 1,
**dadurch gekennzeichnet,**
**dass** der Spulenkern (3) als Polschuh ausgeformt ist.

3. Magnetisch-induktives Durchflussmessgerät nach Anspruch 1 oder 2,
**dadurch gekennzeichnet,**
**dass** der Spulenkern (3) eine Nut (14) aufweist und dass das Befestigungselement (12) zumindest einen zur Nut (14) des Spulenkerns (3) passenden Spund (13) aufweist, wobei Spulenkern (3) und Befestigungselement (12) über eine formschlüssige Verbindung von Nut (14) und Spund (13) miteinander verbunden sind.

4. Magnetisch-induktives Durchflussmessgerät nach einem der Ansprüche 1 bis 3,
**dadurch gekennzeichnet,**
**dass** der Spulenkörper (2) zumindest einen dritten Anschlag (10), wobei das. Befestigungselement (12) im montierten Zustand am dritten Anschlag (10) anliegt, wodurch eine Verschiebung des Befestigungselements (12) in eine zweite Richtung, senkrecht zur ersten Richtung unterbunden ist und wodurch eine Verschiebung des Befestigungselements (12) in eine dritte Richtung, senkrecht zur ersten und zur zweiten Richtung unterbunden ist.

5. Magnetisch-induktives Durchflussmessgerät nach einem der Ansprüche 1 bis 4,
**dadurch gekennzeichnet,**
**dass** zwischen Spulenkern (3) und Messrohr (6) mindestens ein Polblech (16) angeordnet ist.

6. Magnetisch-induktives Durchflussmessgerät nach Anspruch 5,
**dadurch gekennzeichnet,**
**dass** jedes Polblech (16) separat in ein dafür vorgesehenes Formnest (17, 18) im Spulenkörper (2) im montierten Zustand des Spulenkörpers (2) eingeklickt ist.

7. Magnetisch-induktives Durchflussmessgerät nach einem der Ansprüche 1 bis 6,
**dadurch gekennzeichnet,**
**dass** die erste Spulenbaugruppe (1) und eine zweite Spulenbaugruppe gegenüberliegend am Messrohr (6) angeordnet sind, wobei die Spulen (4) so angeschlossen werden, dass das von ihnen erzeugte Magnetfeld in eine gemeinsame Richtung weist.

8. Magnetisch-induktives Durchflussmessgerät nach Anspruch 7,
**dadurch gekennzeichnet,**
**dass** die erste Spulenbaugruppe (1) und die zweite Spulenbaugruppe formschlüssig unter einer Vorspannung koaxial zur Längsachse des Spulenkerns (3) miteinander verbunden sind.

9. Magnetisch-induktives Durchflussmessgerät nach einem der Ansprüche 7 oder 8,
**dadurch gekennzeichnet,**
**dass** die erste Spulenbaugruppe (1) und die zweite Spulenbaugruppe (1) im Wesentlichen komplementär aufgebaut sind.

10. Magnetisch-induktives Durchflussmessgerät nach einem der Ansprüche 1 bis 9,
**dadurch gekennzeichnet,**
**dass** der Spulenkörper (2) zumindest eine Kabelführung (19) zur Führung eines Kabels (15) aufweist, so dass das geführte Kabel (15) einer vorgegebenen Länge einen vorgegebenen Abstand zum Spulenkörper (2) nicht überschreitet.

## Claims

1. Electromagnetic flowmeter for determining the flow of a medium through a measuring tube (6), with at least a first coil assembly (1)
with a coil body (2) designed to hold a coil core (3),
the coil core (3),
a coil (4), and
a fastening element (12) designed to fix the coil core (3) on the coil body (2),
wherein the coil (4) is wound onto the coil body (2) and wherein the coil core (3) is arranged in a first opening (5) of the coil body (2) with a longitudinal axis of the coil core (3) coaxial to the coil (4),
wherein the coil core (3) has a profile (7) and wherein the coil body (2) has a first limit stop (8), which is arranged between the measuring tube (6) and the coil (4), wherein, in the mounted state of the first coil assembly (1), the profile (7) of the coil core (3) rests on the first limit stop (8) of the coil body (2) and prevents the coil core (3) from moving in relation to the coil body (2) along the longitudinal axis of the coil core (3) in a first direction facing away from the measuring tube (6),
**characterized in that**
the coil body (2) has a second limit stop (9) on a side of the coil body (2) that faces away from the measuring tube (6), wherein the coil core (3) is secured on the coil body (2) with the fastening element (12), which rests in the mounted state on the second limit stop (9) of the coil body (2), under pretensioning along the longitudinal axis of the coil core (3) between the first limit stop (8) and the second limit stop (9) of the coil body (2).

2. Electromagnetic flowmeter as claimed in Claim 1,
**characterized in that**
the coil core (3) is formed as a pole shoe.

3. Electromagnetic flowmeter as claimed in Claim 1 or 2,
**characterized in that**
the coil core (3) has a groove (14) and **in that** the fastening element (12) has at least one tongue (13) that matches the groove (14) of the coil core (3), wherein the coil core (3) and the fastening element (12) are connected to one another via positive locking between the groove (14) and the tongue (13).

4. Electromagnetic flowmeter as claimed in one of the Claims 1 to 3,
**characterized in that**
the coil body (2) has at least a third limit stop (10), wherein, in the mounted state, the fastening element (12) rests on the third limit stop (10), preventing the fastening element (12) from moving in a second direction, perpendicular to the first direction, and preventing the fastening element (12) from moving in a third direction, perpendicular to the first and second direction.

5. Electromagnetic flowmeter as claimed in one of the Claims 1 to 4,
**characterized in that**
at least one pole sheet (16) is arranged between the coil core (3) and the measuring tube (6).

6. Electromagnetic flowmeter as claimed in Claim 5,
**characterized in that**
every pole sheet (16) is engaged separately in a molding cavity (17, 18) provided for this purpose in the coil body (2) when the coil body (2) is mounted.

7. Electromagnetic flowmeter as claimed in one of the Claims 1 to 6,
**characterized in that**
the first coil assembly (1) and a second coil assembly are arranged opposite one another on the measuring tube (6), wherein the coils (4) are connected in such a way that the magnetic field they generate is oriented in a common direction.

8. Electromagnetic flowmeter as claimed in Claim 7,
**characterized in that**
the first coil assembly (1) and the second coil assembly are interconnected with positive locking under pretensioning in a manner that is coaxial to the longitudinal axis of the coil core (3).

9. Electromagnetic flowmeter as claimed in one of the Claims 7 or 8,
**characterized in that**
the first coil assembly (1) and the second coil assembly (1) have an essentially complementary structure.

10. Electromagnetic flowmeter as claimed in one of the Claims 1 to 9,
**characterized in that**
the coil body (2) has at least one cable conduit (19) for guiding a cable (15) in such a way that the guided cable (15) of a predefined length does not exceed a predefined distance to the coil body (2).

## Revendications

1. Débitmètre magnéto-inductif destiné à la détermination du débit d'un produit mesuré à travers un tube de mesure (6), avec au moins un premier ensemble de bobine (1)
avec un corps de bobine (2) destiné à la réception d'un noyau de bobine (3), le noyau de bobine (3),
une bobine (4), et
un élément de fixation (12) destiné à la fixation du noyau de bobine (3) sur le corps de bobine (2),
pour lequel la bobine (4) est enroulée sur le corps de bobine (2) et le noyau de bobine (3) est disposé dans une première ouverture (5) du corps de bobine (2) avec un axe longitudinal du noyau de bobine (3) coaxial à la bobine (4),
pour lequel le noyau de bobine (3) présente un profil (7) et pour lequel le corps de bobine (2) présente une première butée (8), laquelle est disposée entre le tube de mesure (6) et la bobine (4), le profil (7) du noyau de bobine (3) reposant, à l'état monté du premier ensemble de bobine (1), contre la première butée (8) et empêche un décalage du noyau de bobine (3) par rapport au corps de bobine (2) le long de l'axe longitudinal du noyau de bobine (3) dans une première direction opposée au tube de mesure (6),
**caractérisé**
**en ce que** le corps de bobine (2) présente une deuxième butée (9) sur un côté opposé au tube de mesure (6) du corps de bobine (2), le noyau de bobine (3) étant fixé sur le corps de bobine (3) avec l'élément de fixation (12), lequel repose à l'état monté sur la deuxième butée (9) du corps de bobine (2), sous une précontrainte le long de l'axe longitudinal du noyau de bobine (3) entre la première butée (8) et la deuxième butée (9) du corps de bobine (2).

2. Débitmètre magnéto-inductif selon la revendication 1,
**caractérisé**
**en ce que** le noyau de bobine (3) est formé en tant que pièce polaire.

3. Débitmètre magnéto-inductif selon la revendication 1 ou 2,
**caractérisé**
**en ce que** le noyau de bobine (3) comporte une rainure (14) et **en ce que** l'élément de fixation (12) comporte au moins une languette (13) adaptée à la rainure (14) du noyau de bobine (3), le noyau de bobine (3) et l'élément de fixation (12) étant reliés entre eux au moyen d'un ajustement serré entre la rainure (14) et la languette (13).

4. Débitmètre magnéto-inductif selon l'une des revendications 1 à 3,
**caractérisé**
**en ce que** le corps de bobine (2) présente au moins une troisième butée (10), l'élément de fixation (12) reposant à l'état monté contre la troisième butée (10), empêchant ainsi un décalage de l'élément de fixation (12) dans une deuxième direction, perpendiculaire à la première direction, et empêchant ainsi un décalage de l'élément de fixation (12) dans une troisième direction, perpendiculaire à la première et à la deuxième direction.

5. Débitmètre magnéto-inductif selon l'une des revendications 1 à 4,
**caractérisé**
**en ce qu'**est disposée au moins une tôle polaire (16) entre le noyau de bobine (3) et le tube de mesure (6).

6. Débitmètre magnéto-inductif selon la revendication 5,
**caractérisé**
**en ce que** chaque tôle polaire (16) est emboîtée dans une cavité de moulage (17, 18) du corps de bobine (2), à l'état monté du corps de bobine (2).

7. Débitmètre magnéto-inductif selon l'une des revendications 1 à 6,
**caractérisé**
**en ce que en ce que** le premier ensemble de bobine (1) et le deuxième ensemble de bobine sont disposés vis-à-vis sur le tube de mesure (6), les bobines (4) étant raccordées de telle manière que le champ magnétique généré par celles-ci est orienté dans une direction commune.

8. Débitmètre magnéto-inductif selon la revendication 7,
**caractérisé**
**en ce que en ce que** le premier ensemble de bobine (1) et le deuxième ensemble de bobine sont reliés entre eux par un ajustement serré, sous une précontrainte de façon coaxiale à l'axe longitudinal du noyau de bobine (3)

9. Débitmètre magnéto-inductif selon l'une des revendications 7 ou 8,
**caractérisé**
**en ce que en ce que** le premier ensemble de bobine (1) et le deuxième ensemble de bobine (1) sont structurés pour l'essentiel de façon complémentaire.

10. Débitmètre magnéto-inductif selon l'une des revendications 1 à 9,
**caractérisé**
**en ce que** le corps de bobine (2) comporte au moins un guide-câble (19) destiné à guider un câble (15), de telle sorte que le câble guidé (15) ne dépasse pas une longueur prédéfinie d'une distance prédéfinie par rapport au corps de bobine (2).
